(19) **Europäisches Patentamt**
**European Patent Office**
**Office européen des brevets**

(11) **EP 2 775 637 A1**

(12) **EUROPEAN PATENT APPLICATION**

(43) Date of publication:
**10.09.2014 Bulletin 2014/37**

(51) Int Cl.:
***H04B 10/54*** *(2013.01)*     ***H04B 10/588*** *(2013.01)*

(21) Application number: **13305249.8**

(22) Date of filing: **05.03.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **ALCATEL LUCENT**
**92100 Boulogne-Billancourt (FR)**

(72) Inventor: **Schuh, Karsten**
**70188 Stuttgart (DE)**

(74) Representative: **MERH-IP**
**Matias Erny Reichl Hoffmann**
**Paul-Heyse-Strasse 29**
**80336 München (DE)**

Remarks:
Amended claims in accordance with Rule 137(2) EPC.

(54) **Frequency Offset QAM Transmission System**

(57)     The present document relates to an optical communication system. In particular, the present document relates to optical communication systems which can be used in conjunction with electrical amplifiers having increased linearity and bandwidth. An optical transmitter configured to generate a modulating signal for modulating an optical carrier signal is described. The optical transmitter (100) comprises a mapping unit (102) configured to generate a sequence of symbols (130) from input data. The symbols of the sequence of symbols (130) correspond to constellation points of a modulation scheme. The sequence of symbols (130) exhibits a spectrum with a center frequency and left and right sidebands at each side of the center frequency, respectively. Furthermore, the optical transmitter (100) comprises a signal processing unit (103, 104, 105) configured to generate a modified sequence of symbols (131) such that the modified sequence of symbols (131) exhibits a modified spectrum with the center frequency and left and right modified sidebands at each side of the center frequency, respectively. The left and right modified sidebands correspond to the left and right sidebands, which have been shifted away from the center frequency, respectively. In addition, the optical transmitter (100) comprises an amplification unit (107) configured to amplify the modified sequence of symbols (131) to yield the modulating signal.

Fig. 1

**Description**

The present document relates to optical communication systems. In particular, the present document relates to optical communication systems which may be used in conjunction with cost efficient electrical amplifiers having increased linearity and bandwidth.

Optical communication systems typically comprise an optical transmitter which is configured to modulate an optical carrier signal with input data to be transmitted across the optical communication system. One or more bits of the input data may be mapped to constellation points of a modulation scheme, e.g. PSK (phase shift keying) modulation schemes, such as BPSK, QPSK, 8PSK, 16PSK or 64PSK, or QAM (quadrature amplitude modulation) schemes, such as 16QAM or 64QAM, in order to generate modulating signals which are used to modulate the optical carrier signal.

In optical transmitters where electrical multi-level modulating signals are used, as is the case e.g. for 16QAM or 64QAM, electrical modulator driver amplifiers with high linearity and high bandwidth from a few kHz to up to tens of GHz should be used to provide the modulating signals. With increased Baud-rates, these bandwidth requirements in conjunction with the linearity requirement are more difficult to achieve and the cost of the electrical modulator driver amplifier increases significantly.

In the present document, an optical transmitter and a corresponding optical receiver are described which enable the use of low cost electrical modulator driver amplifiers which exhibit a relatively high degree of linearity across the complete spectrum of the modulating signal.

According to an aspect, an optical transmitter configured to generate a modulating signal for modulating an optical carrier signal is described. The optical carrier signal may e.g. be a continuous optical wave at a pre-determined wavelength. By way of example, the optical transmitter may be configured to generate a modulated optical signal for a Wavelength Division Multiplex (WDM) system. The modulating signal may be indicative of input data to be transmitted by the optical transmitter over an optical communication channel to a corresponding optical receiver.

The optical transmitter may comprise a mapping unit configured to generate a sequence of symbols from input data. The symbols of the sequence of symbols typically correspond to constellation points of a modulation scheme. By way of example, the input data may comprise a sequence of bits. The mapping unit may be configured to map one or more bits of the sequence of bits to a constellation point of the modulation scheme, thereby generating a sequence of symbols (i.e. a sequence of constellation points). The modulation scheme may comprise constellation points with different amplitudes, such as e.g. a 16QAM or 64QAM modulation scheme.

The sequence of symbols may exhibit a spectrum with a center frequency and left and right sidebands at each side of the center frequency, respectively. The center frequency may correspond to the zero frequency. The right sideband may correspond to a spectrum at positive frequencies and the left sideband may correspond to a spectrum at negative frequencies. In more general terms, the right sideband may correspond to a spectrum at frequencies greater than the center frequency and the left sideband may correspond to a spectrum at frequencies lower than the center frequency. By way of example, the spectrum may be obtained by transforming the sequence of symbols from the time-domain into the frequency-domain using e.g. a DFT or FFT.

The optical transmitter may comprise a signal processing unit configured to generate a modified sequence of symbols such that the modified sequence of symbols exhibits a modified spectrum with the center frequency and left and right modified sidebands at each side of the center frequency, respectively. It should be noted that the symbols of the modified sequence of symbols typically does not correspond to constellation points of the underlying modulation scheme. The left and right modified sidebands may correspond to the left and right sidebands, which have been shifted away from the center frequency, respectively. As such, the signal processing unit may be configured to generate the left and right modified sidebands by shifting the left and right sidebands of the spectrum of the sequence of symbols away from the center frequency, respectively. As a result of shifting the left and right sidebands away from the center frequency, the modified spectrum may exhibit a spectral gap (also referred to as a frequency gap) in the vicinity of the center frequency. The spectral gap may be such that the modified spectrum does not comprise informational content within the spectral gap.

Furthermore, the optical transmitter may comprise an amplification unit configured to amplify a signal derived from the modified sequence of symbols to yield the modulating signal. The signal derived from the modified sequence of symbols may be an analog or electrical version of the modified sequence of symbols. In particular, the optical transmitter may comprise a digital-to-analog converter configured to convert the (digital or numerical) modified sequence of symbols into an analog signal, i.e. into an analog version of the modified sequence of symbols.

The amplification unit may comprise the electrical modulator driver amplifier configured to provide the modulating signal for modulating the optical carrier signal. The amplification unit may be configured to apply a frequency-dependent amplification gain to the modified sequence of symbols, in order to yield the modulating signal. In view of the fact that the modified sequence of symbols comprises a spectral gap in the vicinity of the center frequency, the amplification gain may comprise a non-linearity in the vicinity of the center frequency, without impacting the quality of the modulating signal. A width of the spectral gap may depend on a frequency-dependent amplification gain applied by the amplification unit to the modified sequence of symbols. In particular, the width of the spectral gap may be such that a non-linearity of the frequency-dependent amplification gain falls within the spectral gap of the modified sequence of symbols. The spectral gap may be larger than the frequency range of the non-linearity of the frequency-dependent amplification gain. By way of example, the spectral gap may have a width of 20 or 40MHz or more.

The signal processing unit may comprise a transform unit configured to generate a set of frequency coefficients from the sequence of symbols. By way of example, the transform unit may be configured to perform a discrete spectral transform or a time-domain to frequency-domain transform, such as a Fast Fourier Transform (FFT) or a Discrete Fourier Transform (DFT). Furthermore, the signal processing unit may comprise a gap insertion unit configured to shift one or more of the frequency coefficients of the set of frequency coefficients to yield a modified set of frequency coefficients. In particular, the gap insertion unit may be configured to shift frequency coefficients of the set of frequency coefficients at the left side and at the right side of the center frequency towards higher absolute frequency values. In other words, the frequency coefficients of the left and right sidebands may be shifted away from the center frequency.

Furthermore, the gap insertion unit may be configured to set frequency coefficients in an interval around the center frequency to values which are equal to or smaller than a pre-determined threshold value, in order to create the spectral gap. The pre-determined threshold value may be substantially zero. By way of example, the pre-determined threshold value may be $10^{-5}$, or $10^{-10}$. By shifting some of the frequency coefficients away from the center frequency and by - subsequently - setting the frequency coefficients of the "empty" frequency bins in the vicinity of the center frequency to the pre-determined threshold value, it can be ensured that the spectral information is maintained, while at the same time creating a spectral gap which does not comprise any informational content.

The signal processing unit may further comprise an inverse transform unit configured to generate the modified sequence of symbols from the modified set of frequency coefficients. The inverse transform unit may be configured to perform a corresponding inverse transform with respect to the time-domain to frequency-domain transform performed by the transform unit.

By way of example, the gap insertion unit may be configured to generate the modified set of frequency coefficients $Y_k$, with $k = -\frac{N}{2}, \dots, \frac{N}{2} - 1$, from the set of frequency coefficients $X_k$, with $k = -\frac{N}{2}, \dots, \frac{N}{2} - 1$, by setting $Y_k = X_{k-T}$, for at least some of $k \geq T$ and by setting $Y_k = X_{k+T}$ for at least some of $k < -T$. In particular, the gap insertion unit may be configured to determine the modified set of frequency coefficients $Y_k$ as

$$Y_k = \begin{cases} \epsilon, k = -(T), \dots, (T-1) \\ X_{k-T}, k = T, \dots, \frac{N}{2} - 1 \\ X_{k+T}, k = -(T+1), \dots, -\frac{N}{2} \end{cases}.$$

As such, the gap insertion unit may be configured to generate a spectral gap having a width which corresponds to $Q = 2T$ frequency bins around the center frequency. $T$ may be a positive integer greater than 0. The frequency coefficients of the spectral gap may be set to the pre-determined threshold value ε. On the other hand, the original frequency coefficients $X_k$ may be shifted away from the center frequency.

It should be noted that as a result of the shifting of the original frequency coefficients $X_k$, the outer-most frequency coefficients $X_k$ may be lost. A sampling rate of the sequence of symbols may be greater than a Nyquist rate of the sequence of symbols. By doing this, it can be ensured that the outer-most frequency coefficients $X_k$ do not comprise informational content and may be discarded without inserting noise into the original sequence of symbols.

As indicated above, a number $Q$ of frequency coefficients (e.g. around the center frequency) may be set to the pre-determined threshold value ε to create the spectral gap. It should be noted that using a single-sideband based method for generating the spectral gap, various frequency offsets may be obtained, depending only on the frequency resolution, which could be increased by increasing the oversampling ratio. Once the sidebands are divided using the single-sideband based method, the sidebands could be individually shifted. The result would be a signal with a frequency gap and a shifted center frequency.

The number $Q$ of frequency coefficients may be a multiple of two. In particular, the number $Q$ of frequency coefficients may be $Q = 2T$. Furthermore, a number $N$ of frequency bins (and corresponding frequency coefficients) provided by the transform unit may be a multiple of two. By doing this, the width of the spectral gap may be scaled easily, even if the corresponding optical receiver uses a time-frequency transform having a different number of frequency bins.

The optical transmitter may further comprise a modulation unit configured to modulate the optical carrier signal with the modulating signal.

According to another aspect, an optical receiver configured to recover data from a received optical signal is described. The received optical signal may correspond to the modulated optical signal generated by the above mentioned optical transmitter, subsequent to transmission over an optical communication channel (such as e.g. a WDM channel). The optical receiver may comprise an optical-to-digital converter unit configured convert the received optical signal into a received digital signal. The received digital signal may exhibit a spectrum with a center frequency and left and right sidebands at each side of the center frequency, respectively. In particular, the spectrum of the received digital signal may exhibit a spectral gap around the center frequency, which does not comprise informational content. It should be noted that due to distortions incurred during transmission, the spectral gap of the spectrum of the received digital signal typically comprises non-zero frequency coefficients (i.e. frequency coefficients which may exceed the pre-determined threshold value $\varepsilon$.

The optical receiver may comprise a signal processing unit configured to generate a modified received digital signal such that the modified received digital signal exhibits a modified spectrum with the center frequency and left and right modified sidebands at each side of the center frequency, respectively. The left and right modified sidebands may correspond to the left and right sidebands, which have been shifted towards the center frequency, respectively. In other words, the signal processing unit may be configured to generate the left and right modified sidebands by shifting the left and right sidebands towards the center frequency, respectively. In particular, the signal processing unit may be configured to remove a spectral gap of a pre-determined width around the center frequency. The spectral gap may have been inserted into the received digital signal by a corresponding transmitter.

Furthermore, the optical receiver may comprise a data recovery unit configured to recover the data from the modified received digital signal. The data recovery unit may be configured to perform various digital signal processing of the modified received digital signal, as described in the present document. Furthermore, the data recovery unit may be configured to perform symbol identification.

According to a further aspect, an optical signal comprising a modulated optical signal is described. The modulated optical signal may be indicative of a modulating signal, wherein the modulating signal exhibits a spectrum with a center frequency and left and right modified sidebands at each side of the center frequency, respectively. The left and right sidebands may correspond to left and right sidebands of a sequence of data symbols, which have been shifted away from the center frequency, respectively, to provide a frequency gap (also referred to as spectral gap) around the center frequency. As such, the spectrum of the modulating signal typically does not comprise informational content within the frequency gap.

According to another aspect, a method for generating a modulating signal for modulation of an optical carrier signal is described. The method may comprise generating a sequence of symbols from input data. The symbols of the sequence of symbols typically correspond to constellation points of a modulation scheme. The sequence of symbols may exhibit a spectrum with a center frequency and left and right sidebands at each side of the center frequency, respectively. The method may further comprise generating a modified sequence of symbols such that the modified sequence of symbols exhibits a modified spectrum with the center frequency and left and right modified sidebands at each side of the center frequency, respectively. The left and right modified sidebands may correspond to the left and right sidebands, which have been shifted away from the center frequency, respectively, to provide a spectral gap around the center frequency. In other words, the method may comprise generating the left and right modified sidebands by shifting the left and right sidebands away from the center frequency, respectively, to provide a spectral gap around the center frequency. In addition, the method may comprise amplifying the modified sequence of symbols to yield the modulating signal.

According to another aspect, a method for recovering data from a received optical signal is described. The method may comprise converting the received optical signal into a received digital signal. The received digital signal typically exhibits a spectrum with a center frequency and left and right sidebands at each side of the center frequency, respectively. The method may further comprise generating a modified received digital signal such that the modified received digital signal exhibits a modified spectrum with the center frequency and left and right modified sidebands at each side of the center frequency, respectively. The left and right modified sidebands may correspond to the left and right sidebands, which have been shifted towards the center frequency, respectively, to close a pre-determined spectral gap. In other words, the method may comprise generating the left and right modified sidebands by shifting the left and right sidebands towards the center frequency, respectively, to close a pre-determined spectral gap. Furthermore, the method may comprise recovering the data from the modified received digital signal.

According to a further aspect, a software program is described. The software program may be adapted for execution on a processor and for performing the method steps outlined in the present document when carried out on the processor.

According to another aspect, a storage medium is described. The storage medium may comprise a software program adapted for execution on a processor and for performing the method steps outlined in the present document when carried out on the processor.

According to a further aspect, a computer program product is described. The computer program may comprise executable instructions for performing the method steps outlined in the present document when executed on a computer.

It should be noted that the methods and systems including its preferred embodiments as outlined in the present patent application may be used stand-alone or in combination with the other methods and systems disclosed in this document. Furthermore, all aspects of the methods and systems outlined in the present patent application may be arbitrarily combined. In particular, the features of the claims may be combined with one another in an arbitrary manner.

The invention is explained below in an exemplary manner with reference to the accompanying drawings, wherein

Fig. 1 shows a block diagram of an example optical transmitter;
Fig. 2 illustrates an example scheme for generating a modulating signal comprising a frequency gap;
Fig. 3 shows a block diagram of example digital signal processing performed in an optical receiver; and
Fig. 4 shows a block diagram of an example optical receiver comprising a frequency gap removal unit.

As indicated in the introductory section, optical transmitters typically comprise electrical amplifiers to generate the modulating signal which is used to modulate the optical carrier (which typically is a continuous optical wave at a particular wavelength). In case of modulation schemes which comprise a plurality of energy levels, such as 16 QAM or 64 QAM, the multi-level amplifier should provide high linearity over a large frequency range. As outlined above, such amplifiers typically have a relatively high cost.

The use of low cost amplifiers, e.g. RF amplifiers, usually fails due to the low frequency limit of the frequency range within which the amplifiers provide a sufficient degree of linearity. In other words, it has been observed that amplifiers at reduced cost typically exhibit strong non-linearity for low frequencies, e.g. in the range of 0Hz to 10 or 100 MHz. On the other hand, it has been observed that such low cost amplifiers, e.g. RF amplifiers, provide a high bandwidth and a relatively high linearity for frequencies greater than 10 or 100MHz, even compared to amplifiers which are explicitly designed for optical transmitters.

In the present document, it is proposed to modify the modulating signal such that it can be amplified by low cost amplifiers, without being distorted. In particular, it is proposed to introduce a frequency gap between the two sidebands of the modulating signal. The width of the frequency gap may be selected in dependence of the gain curve of the amplifier which is used to amplify the modulating signal. By way of example, the frequency gap may have a width of a few kHz up to some MHz (e.g. 20 or 40MHz). As a result of introducing a frequency gap, a modified modulating signal is obtained, wherein the modified modulating signal has a spectrum which exhibits a frequency gap centered around the frequency 0Hz (also referred to as the center frequency). The modified modulating signal may be amplified using low cost modulator driver amplifiers, because the non-linearity of such amplifiers coincides with the frequency gap in the power spectrum of the modified modulating signal.

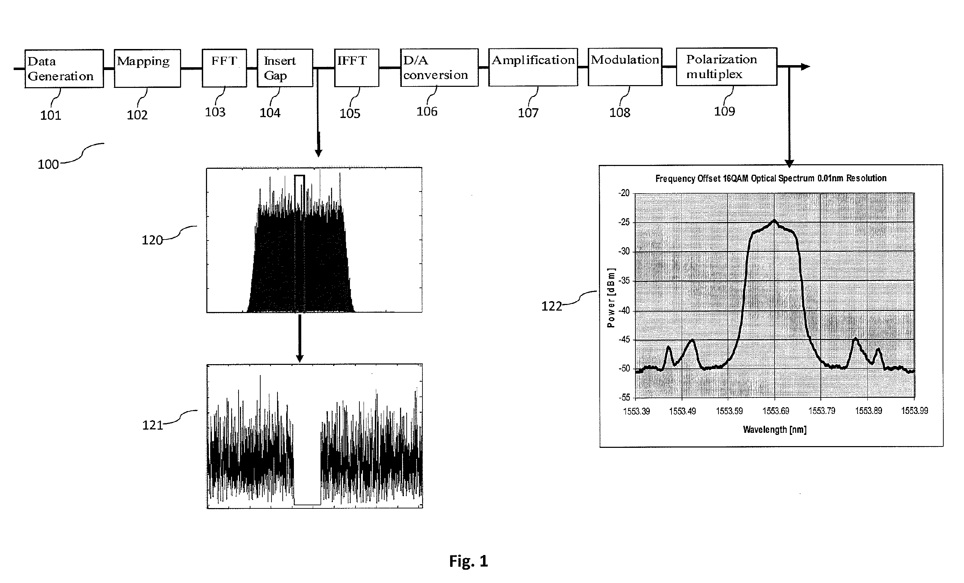

Fig. 1 shows a block diagram of an example optical transmitter 100. The optical transmitter 100 comprises a data source 101 which provides input data to be transmitted across the optical communication system. The input data typically corresponds to a sequence of bits. The input data may be mapped to a sequence of symbols using a mapping unit 102 of the optical transmitter 100. The mapping unit 102 may be configured to map one or more bits of the input data to a constellation point of the underlying modulation scheme, e.g. of 16QAM or 64QAM. As such, the mapping unit 102 is configured to transform the sequence of bits from the input data to a sequence of symbols, wherein each symbol corresponds to a constellation point of the underlying modulation scheme. A symbol may be represented by a complex number (comprising an inphase component and a quadrature component). As such, the sequence of symbols may correspond to a sequence of complex numbers.

The transmitter 100 may comprise a transform unit 103 which is configured to transform the sequence of symbols from the time domain into the frequency domain. By way of example, the transform unit 103 may be configured to perform a Fast Fourier Transform (FFT) or Discrete Fourier Transform (DFT). As such, the transform unit 103 may be configured to transform the sequence of (complex) symbols $x_n$ into a set of frequency coefficients $X_k$, e.g.

$$X_k = \sum_{n=-N/2}^{N/2-1} x_n e^{-i2\pi k(n+\frac{N}{2})/N}, \ k = -\frac{N}{2}, \ldots, \frac{N}{2} - 1.$$ The set of frequency coefficients $X_k$ is indicative of a spectrum of the sequence of symbols, wherein the spectrum typically comprises two sidebands centered around the zero-frequency. Furthermore, the transmitter comprises an inverse transform unit 105, which is configured to perform an inverse transform, e.g. an inverse FFT (IFFT) with $x_n = \frac{1}{N} \sum_{k=-N/2}^{N/2-1} X_k e^{i2\pi(k+\frac{N}{2})n/N}$.

The transmitter 100 may further comprise a gap insertion unit 104 which is configured to insert a frequency gap into the spectrum. The frequency gap may be generated by frequency shifting of one or both sidebands of the data signal in the digital signal processing part of the transmitter 100. This may be achieved by shifting the frequency coefficients towards outer (i.e. higher) frequencies. By way of example, this may be achieved by mapping the set of frequency coefficients such that

$$Y_k = \begin{cases} 0, k = -(T), \ldots, (T-1) \\ X_{k-T}, k = T, \ldots, \frac{N}{2} - 1 \\ X_{k+T}, k = -(T+1), \ldots, -\frac{N}{2} \end{cases},$$

wherein $T$ is indicative of the width of the frequency gap and wherein $Y_k$ is the modified set of frequency coefficients, which subsequent to the application of the inverse transform provide a modified symbol signal or a modified sequence of symbols $y_n = \frac{1}{N} \sum_{k=-N/2}^{N/2-1} Y_k e^{i2\pi(k+\frac{N}{2})n/N}$, which may be used to modulate the optical carrier.

As such, the modified set of frequency coefficients $Y_k$ may be obtained by shifting the frequency coefficients towards higher absolute frequencies. This is illustrated in Fig. 1, where the spectrum 120 of the sequence of symbols is shown, and where the excerpt 121 of the spectrum 120 shows a frequency gap. The size of the FFT and the IFFT may be equal, notably if the same amount of points (i.e. zeros) are added in the low frequency region and removed in the high frequency region (where due to the signal bandwidth the power is typically close to zero).

It should be noted that in order to preserve the complete spectral content of the sequence of symbols, it should be ensured that spectral coefficients at the outer frequencies of the two sidebands, i.e. $X_k, k = \frac{N}{2} - 1 - T, \ldots, \frac{N}{2} - 1$ and $X_k, k = -\frac{N}{2} + T, \ldots, -\frac{N}{2}$ do not comprise significant energy. In other words, it should be ensured that the Nyquist frequency of the sequence of symbols exceeds the bandwidth of the sequence of symbols by a sufficiently large amount, in order to be able to insert the frequency gap. This may be achieved e.g. by oversampling the input data (in Fig. 1 an oversampling by the factor 2 is shown), such that the sampling rate exceeds the Nyquist rate by a sufficient amount.

An alternative method for generating the frequency gap may be to generate a single sideband signal for each of the sidebands followed by frequency shifting of each of the sideband signals, and by a subsequent combination of both single-sideband signals. This may be achieved using e.g. a Hilbert transform. In particular, a lower sideband modulation and an upper sideband modulation may be performed.

The transform unit 103, the gap insertion unit 104 and the inverse transform unit 105 may be implemented using a digital signal processing unit. The digital signal processing unit of the transmitter 100 may perform further signal processing tasks. The transmitter 100 may further comprise a D/A (Digital to Analog) conversion unit 106 configured to convert the modified sequence of symbols (also referred to as the modified symbol signal) from the digital domain into the analog domain. Subsequently, the analog modified symbol signal may be amplified (in the amplification unit 107) and modulated onto an optical carrier (in the modulation unit 108). The amplification unit 107 may comprise a low cost amplifier due to the fact that the modified sequence of symbols does not comprise frequency components around the center frequency.

It should be noted that the optical transmitter 100 may make use of polarization multiplexing. In this case, different modified symbol signals may be modulated onto different (orthogonal) polarizations of the optical carrier. As a result of the processing performed by the optical transmitter 100, a modulated optical signal is obtained, wherein the modulated optical signal exhibits a band-limited power spectrum 122 as shown in Fig. 1.

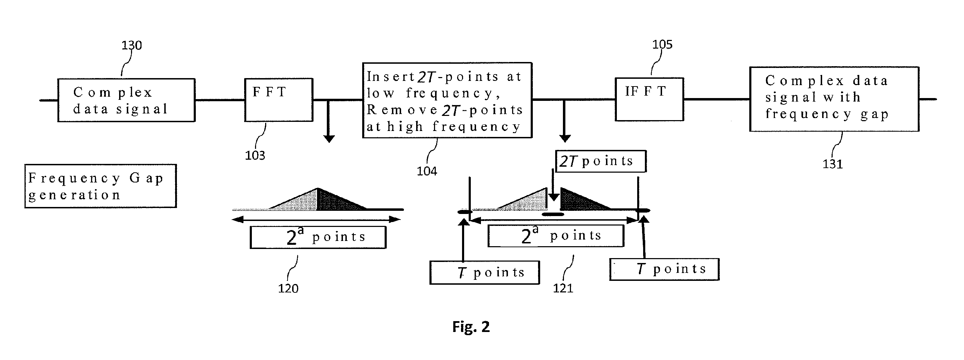

Fig. 2 illustrates the generation of a modified symbol signal 131 $y_n$ from a symbol signal 130 (i.e. from a sequence of symbols $x_n$) in more detail. The symbol signal 130 may be submitted to an FFT of order $N$, e.g. $N = 2^a$, with $a$ being a positive integer. The set of transform coefficients $X_k$ forms a spectrum 120 of the symbol signal 130. The gap insertion unit 104 may be configured to insert $2T$ points of zeros at the low frequencies of the spectrum 120 (i.e. in the vicinity of the center frequency). Furthermore, the gap insertion unit 104 may be configured to remove $2T$ points at the high frequencies of the spectrum 120 ($T$ points at the positive high frequencies and $T$ points at the negative high frequencies of the spectrum 120; or $T$ points at the high frequencies of the right sideband and $T$ points at the high frequencies of the left sideband of the spectrum 120). As a result, the two sidebands of the spectrum 120 are shifted outwards (towards higher frequencies), as illustrated by the modified spectrum 121 formed by the modified set of transform coefficients $Y_k$. The modified set of transform coefficients $Y_k$ may be converted into the time domain using an IFFT, thereby yielding the modified symbol signal 131. The spectrum 121 of the modified symbol signal 131 comprises a frequency gap at low frequencies. As a result, a non-linearity of the amplification unit 107 at low frequencies does not affect the modified symbol signal 131, i.e. does not distort the modified symbol signal 131.

By way of example, the FFT and the IFFT may have a length of $N = 2^a$, with $a = 19$ and the frequency gap may correspond to $2T = 2^b$ points, with $b$ being an integer smaller than $a$, e.g. $b = 8$. The use of exponents of 2 for the length of the FFT / IFFT and for the frequency gap is advantageous, because it allows the receiver and the transmitter to apply FFTs and IFFTs with a different length. By way of example, the receiver may use an FFT of order $2^c$, with $c$ being an integer, e.g. $c = 18$. In such cases, the frequency gap scales with $\dfrac{2^c}{2^a}$ such that the frequency gap at the receiver is given by $2^b \dfrac{2^c}{2^a}$ points (e.g. $2^7$ in the case of $c = 18$ and $a = 19$).

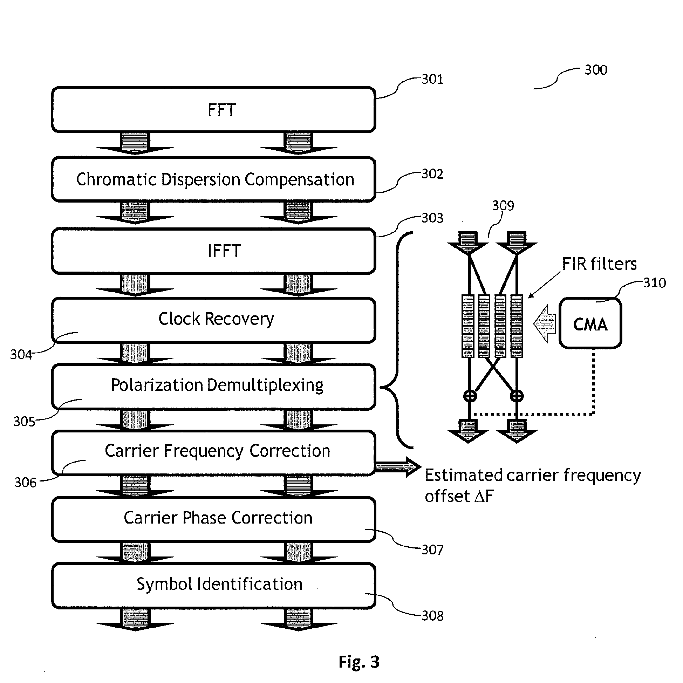

Fig. 3 shows a block diagram of an example optical receiver. In particular, Fig. 3 shows example components of a digital signal processor 300 comprised within a coherent optical receiver. The digital signal processor (DSP) 300 comprises a transform unit 301 which transforms the received signal (derived from the received optical signal via optical-to-analog and analog-to-digital conversion) from the time-domain into the frequency-domain (e.g. using a Fast Fourier Transform, or a Discrete Fourier Transform). The subsequent chromatic dispersion (CD) compensation unit 302 of the DSP 300 typically operates on the frequency-domain representation of the received signal, thereby yielding a CD compensated signal in the frequency-domain. The CD compensated signal is transformed into the time-domain using an inverse transform unit 303 (performing e.g. an inverse Fast Fourier Transform, or an inverse Discrete Fourier Transform). Furthermore, the DSP 300 comprises a clock recovery unit 304 for recovering a clocking signal used within the optical communication system 200.

The optical signal transmitted via an optical communication channel is typically polarization multiplexed. This means that the optical signal comprises two orthogonally polarized signal components (each at a particular baud-rate, e.g. at 28Gbaud or at 32.5Gbaud). The polarization demultiplexing unit 305 is configured to isolate the two orthogonally polarized signal components from the received signal. For this purpose, the polarization demultiplexing unit 305 may comprise a demultiplexing filter 309 comprising four FIR (Finite Impulse Response) filters arranged in a butterfly arrangement. The FIR filters 309 have a pre-determined number of filter taps which may be determined using a CMA (Constant Modulus Algorithm) 310.

Furthermore, the DSP 300 comprises a carrier frequency estimation and compensation unit 306 which is adapted to determine an offset between the carrier frequency of the received signal and the frequency of the local oscillator of the coherent receiver. Additional components of the DSP 300 are typically a carrier phase estimation and compensation unit 307 configured to estimate and compensate distortions incurred on the phase of the received signal. Finally, the compensated received signal is submitted to symbol identification in the detection unit 308, thereby recovering the data transmitted over the optical communication system. The detection unit 308 makes use of the same constellation diagram used by the mapping unit 102 of the transmitter 100.

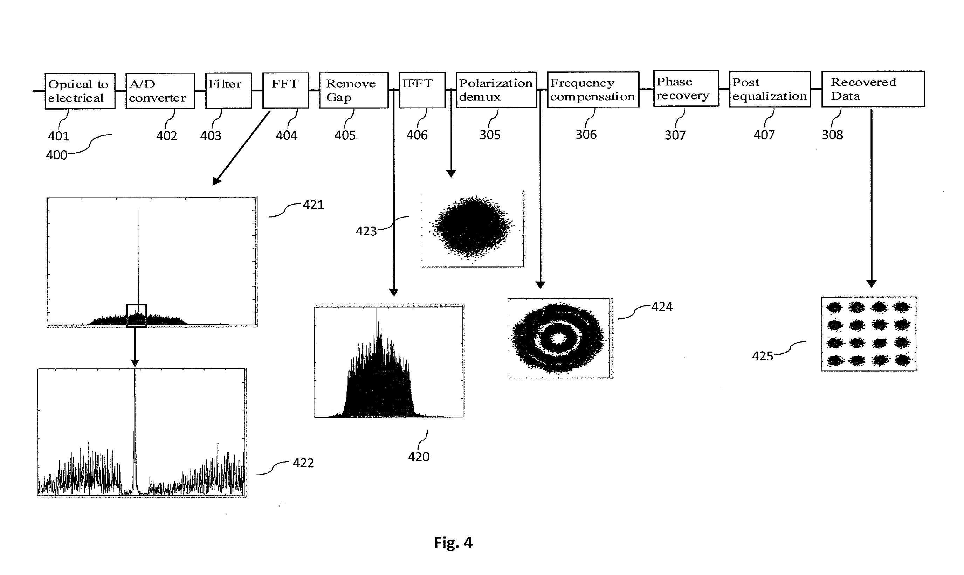

The digital processing 300 of the receiver may be extended to remove the frequency gap from the received optical signal prior to symbol identification. Fig. 4 shows a block diagram of an example optical receiver 400 comprising a gap removal unit 405 configured to remove a frequency gap from the received signal. As indicated above, the optical receiver 400 may comprise an optical-to-electrical conversion unit 401 (comprising e.g. a photodiode) configured to provide an electrical version of the received optical signal. The received electrical signal may be converted into the digital domain using an A/D conversion unit 402. A filter unit 403 of the optical receiver 400 may be used to remove noise comprised within the received signal. The filter unit 403 may be configured to perform CD compensation. The filter unit 403 and the following processing units may be implemented using a digital signal processing unit.

Furthermore, the optical receiver 400 may comprise a transform unit 404 which is configured to convert the received signal from the time-domain into the frequency-domain, using e.g. an FFT or a DFT. As a result, a set of frequency coefficients is obtained which represents a spectrum 421, 422 of the received digital signal. It can be seen from Fig. 4 that the spectrum 421, 422 of the received digital signal comprises a frequency gap in its low frequency range (around the center frequency). The peak of the spectrum 421, 422 is typically due to the local oscillator applied within the optical-to-electrical conversion unit 401. The optical receiver 404 may comprise a gap removal unit 405 which is configured to perform the inverse operation of the gap insertion unit 104 of the transmitter 100. In particular, the gap removal unit 405 may be configured to shift frequency coefficients from higher frequencies towards lower frequencies. On the other hand, the frequency coefficients at the higher frequencies may be filled (i.e. padded) with zeros. As a result, a modified set of frequency coefficients is obtained which represents a modified spectrum 420 of the received digital signal. The modified set of frequency coefficients may be converted into the time-domain using an inverse transform unit 406 to yield the modified received digital signal.

Subsequently, the digital signal processing as described in the context of Fig. 3 may be applied to the modified received digital signal. It should be noted that the CD compensation 302 of Fig. 3 and the gap removal unit 405 may make use of the same transform unit and inverse transform unit, thereby reducing the computational complexity of the optical receiver 400.

Fig. 4 also illustrates scatter plots 423, 424, 425 of the received digital signal at the different processing stages. Furthermore, Fig. 4 shows an example post-equalization unit 407 which may be used to perform an equalization of the received digital signal subsequent to polarization de-multiplexing, frequency compensation and phase recovery, and prior to symbol identification.

In the present document an optical transmitter and an optical receiver (as well as corresponding methods) have been described which enable the use of low cost amplifiers. As a result, the cost of an optical transmission system can be reduced, while maintaining the requirements with regards to linearity and bandwidth.

It should be noted that the description and drawings merely illustrate the principles of the proposed methods and systems. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the proposed methods and systems and the concepts contributed by the inventors to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Furthermore, it should be noted that steps of various above-described methods and components of described systems can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

In addition, it should be noted that the functions of the various elements described in the present patent document may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

Finally, it should be noted that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

**Claims**

1.   An optical transmitter (100) configured to generate a modulating signal (131) for modulating an optical carrier signal, the optical transmitter (100) comprising

    - a mapping unit (102) configured to generate a sequence of symbols (130) from input data; wherein the symbols of the sequence of symbols (130) correspond to constellation points of a modulation scheme; wherein the sequence of symbols (130) exhibits a spectrum with a center frequency and left and right sidebands at each side of the center frequency, respectively;
    - a signal processing unit (103, 104, 105) configured to generate a modified sequence of symbols (131) such that the modified sequence of symbols (131) exhibits a modified spectrum; wherein the modified spectrum comprises left and right modified sidebands at each side of the center frequency, respectively; wherein the signal processing unit (103, 104, 105) is configured to generate the left and right modified sidebands by shifting the left and right sidebands of the spectrum of the sequence of symbols (130) away from the center frequency, respectively; and
    - an amplification unit (107) configured to amplify a signal derived from the modified sequence of symbols (131) to yield the modulating signal.

2. The optical transmitter (100) of claim 1, wherein the signal processing unit (103, 104, 105) comprises

- a transform unit (103) configured to generate a set of frequency coefficients (120) from the sequence of symbols (130);
- a gap insertion unit (104) configured to shift one or more of the frequency coefficients of the set of frequency coefficients (120) to yield a modified set of frequency coefficients (121); and
- an inverse transform unit (104) configured to generate the modified sequence of symbols (131) from the modified set of frequency coefficients (121).

3. The optical transmitter (100) of claim 1, wherein

- the transform unit (103) is configured to perform a discrete spectral transform; and
- the inverse transform unit (105) is configured to perform a corresponding inverse transform.

4. The optical transmitter (100) of any of claims 2 to 3, wherein the gap insertion unit (104) is configured to

- shift frequency coefficients of the set of frequency coefficients (120) at the left side and at the right side of the center frequency towards higher absolute frequency values; and
- set frequency coefficients in an interval around the center frequency to values which are equal to or smaller than a pre-determined threshold value.

5. The optical transmitter (100) of claim 4, wherein the gap insertion unit (104) is configured to generate the modified set of frequency coefficients (121) $Y_k$, with $k = -\frac{N}{2}, ..., \frac{N}{2} - 1,$ from the set of frequency coefficients $X_k$, with $k = -\frac{N}{2}, ..., \frac{N}{2} - 1,$ by setting $Y_k = X_{k-T}$, for at least some of $k \geq T$ and by setting $Y_k = X_{k+T}$ for at least some of $k < -T$.

6. The optical transmitter (100) of any of claims 4 to 5, wherein

- a number $Q$ of frequency coefficients are set equal to or smaller than the pre-determined threshold value;
- the number $Q$ of frequency coefficients is a multiple of two; and
- a number of frequency bins $N$ provided by the transform unit (103) is a multiple of two.

7. The optical transmitter (100) of any previous claims, wherein

- the left and right sidebands are shifted to provide a frequency gap around the center frequency; and
- a width of the frequency gap depends on a frequency-dependent amplification gain applied by the amplification unit (107) to the modified sequence of symbols (131).

8. The optical transmitter (100) of any previous claims, wherein a sampling rate of the sequence of symbols (130) is greater than a Nyquist rate of the sequence of symbols (130).

9. The optical transmitter (100) of any previous claims, wherein the optical transmitter (100) further comprises a modulation unit (108) configured to modulate the optical carrier signal with the modulating signal.

10. The optical transmitter (100) of any previous claims, wherein

- the center frequency corresponds to the zero frequency;
- the right sideband comprises positive frequency; and
- the left sideband comprises negative frequencies.

11. An optical receiver (400) configured to recover data from a received optical signal, the optical receiver (400) comprising

- an optical-to-digital converter unit (401, 402) configured convert the received optical signal into a received digital signal; wherein the received digital signal exhibits a spectrum (421, 422) with a center frequency and left and right sidebands at each side of the center frequency, respectively;
- a signal processing unit (404, 405, 406) configured to generate a modified received digital signal from the received digital signal; wherein the modified received digital signal exhibits a modified spectrum (420) with left and right modified sidebands at each side of the center frequency, respectively; wherein the signal processing unit (404, 405, 406) is configured to generate the left and right modified sidebands by shifting the left and right sidebands towards the center frequency, respectively; and
- a data recovery unit (305, 306, 307, 407, 308) configured to recover the data from the modified received digital signal.

12. The optical receiver (400) of claim 11, wherein the signal processing unit is configured to remove a frequency gap of a pre-determined width around the center frequency.

13. A method for generating a modulating signal (131) for modulation of an optical carrier signal, the method comprising

- generating a sequence of symbols (130) from input data; wherein the symbols of the sequence of symbols (130) correspond to constellation points of a modulation scheme; wherein the sequence of symbols (130) exhibits a spectrum with a center frequency and left and right sidebands at each side of the center frequency, respectively;
- generating a modified sequence of symbols (131) such that the modified sequence of symbols (131) exhibits a modified spectrum with left and right modified sidebands at each side of the center frequency, respectively; wherein generating the modified sequence of symbols comprises generating the left and right modified sidebands by shifting the left and right sidebands away from the center frequency, respectively, to provide a spectral gap around the center frequency; and
- amplifying a signal derived from the modified sequence of symbols (131) to yield the modulating signal.

14. A method for recovering data from a received optical signal, the method comprising

- converting the received optical signal into a received digital signal; wherein the received digital signal exhibits a spectrum (421, 422) with a center frequency and left and right sidebands at each side of the center frequency, respectively;
- generating a modified received digital signal such that the modified received digital signal exhibits a modified spectrum (420) with left and right modified sidebands at each side of the center frequency, respectively; wherein generating the modified received digital signal comprises generating the left and right modified sidebands by shifting the left and right sidebands towards the center frequency, respectively, to close a pre-determined spectral gap; and
- recovering the data from the modified received digital signal.

15. An optical signal comprising a modulated optical signal; wherein the modulated optical signal is indicative of a modulating signal, wherein the modulating signal exhibits a spectrum with a center frequency and left and right modified sidebands at each side of the center frequency, respectively; wherein the left and right sidebands correspond to left and right sidebands of a sequence of data symbols, which have been shifted away from the center frequency, respectively, to provide a frequency gap around the center frequency.

**Amended claims in accordance with Rule 137(2) EPC.**

**1.** An optical transmitter (100) configured to generate a modulating signal (131) for modulating an optical carrier signal, the optical transmitter (100) comprising

- a mapping unit (102) configured to generate a sequence of symbols (130) from input data; wherein the symbols of the sequence of symbols (130) correspond to constellation points of a modulation scheme; wherein the sequence of symbols (130) exhibits a spectrum with a center frequency and left and right sidebands at each side of the center frequency, respectively;
- a signal processing unit (103, 104, 105) configured to generate a modified sequence of symbols (131) such that the modified sequence of symbols (131) exhibits a modified spectrum; wherein the modified spectrum comprises left and right modified sidebands at each side of the center frequency, respectively; wherein the signal processing unit (103, 104, 105) is configured to generate the left and right modified sidebands by shifting the left and right sidebands of the spectrum of the sequence of symbols (130) away from the center frequency, respectively; and
- an amplification unit (107) configured to amplify a signal derived from the modified sequence of symbols (131) to yield the modulating signal;

wherein

- the left and right sidebands are shifted to provide a frequency gap around the center frequency corresponding to zero frequency.

**2.** The optical transmitter (100) of claim 1, wherein the signal processing unit (103, 104, 105) comprises

- a transform unit (103) configured to generate a set of frequency coefficients (120) from the sequence of symbols (130);
- a gap insertion unit (104) configured to shift one or more of the frequency coefficients of the set of frequency coefficients (120) to yield a modified set of frequency coefficients (121); and
- an inverse transform unit (104) configured to generate the modified sequence of symbols (131) from the modified set of frequency coefficients (121).

**3.** The optical transmitter (100) of claim 2, wherein

- the transform unit (103) is configured to perform a discrete spectral transform; and
- the inverse transform unit (105) is configured to perform a corresponding inverse transform.

**4.** The optical transmitter (100) of any of claims 2 to 3, wherein the gap insertion unit (104) is configured to

- shift frequency coefficients of the set of frequency coefficients (120) at the left side and at the right side of the center frequency towards higher absolute frequency values; and
- set frequency coefficients in an interval around the center frequency to values which are equal to or smaller than a predetermined threshold value.

**5.** The optical transmitter (100) of claim 4, wherein the gap insertion unit (104) is configured to generate the modified set of frequency coefficients (121) $Y_k$, with $k = -\frac{N}{2}, \ldots, \frac{N}{2} - 1,$ from the set of frequency coefficients $X_k$, with

$$k = -\frac{N}{2}, \ldots, \frac{N}{2} - 1,$$ by setting $Y_k = X_{k-T}$, for at least some of $k \geq T$ and by setting $Y_k = X_{k+T}$ for at least some of $k < -T$, wherein N is the number of frequency coefficients generated by the transform unit (103).

**6.** The optical transmitter (100) of any of claims 4 to 5, wherein

- a number $Q$ of frequency coefficients are set equal to or smaller than the pre-determined threshold value;
- the number $Q$ of frequency coefficients is a multiple of two; and
- a number of frequency bins $N$ provided by the transform unit (103) is a multiple of two.

**7.** The optical transmitter (100) of any previous claims, wherein
a width of the frequency gap depends on a frequency-dependent amplification gain applied by the amplification unit (107) to the modified sequence of symbols (131).

**8.** The optical transmitter (100) of any previous claims, wherein a sampling rate of the sequence of symbols (130) is greater than a Nyquist rate of the sequence of symbols (130).

**9.** The optical transmitter (100) of any previous claims, wherein the optical transmitter (100) further comprises a modulation unit (108) configured to modulate the optical carrier signal with the modulating signal.

**10.** The optical transmitter (100) of any previous claims, wherein

- the center frequency corresponds to the zero frequency;

- the right sideband comprises positive frequency; and
- the left sideband comprises negative frequencies.

**11.** An optical receiver (400) configured to recover data from a received optical signal, the optical receiver (400) comprising

- an optical-to-digital converter unit (401, 402) configured to convert the received optical signal into a received digital signal; wherein the received digital signal exhibits a spectrum (421, 422) with a center frequency and left and right sidebands at each side of the center frequency, respectively;
- a signal processing unit (404, 405, 406) configured to generate a modified received digital signal from the received digital signal; wherein the modified received digital signal exhibits a modified spectrum (420) with left and right modified sidebands at each side of the center frequency, respectively; wherein the signal processing unit (404, 405, 406) is configured to generate the left and right modified sidebands by shifting the left and right sidebands towards the center frequency, respectively; and
- a data recovery unit (305, 306, 307, 407, 308) configured to
recover the data from the modified received digital signal;
wherein the signal processing unit is configured to remove a frequency gap of a pre-determined width around the center frequency corresponding to zero frequency.

**12.** A method for generating a modulating signal (131) for modulation of an optical carrier signal, the method comprising

- generating a sequence of symbols (130) from input data; wherein the symbols of the sequence of symbols (130) correspond to constellation points of a modulation scheme; wherein the sequence of symbols (130) exhibits a spectrum with a center frequency and left and right sidebands at each side of the center frequency, respectively;
- generating a modified sequence of symbols (131) such that the modified sequence of symbols (131) exhibits a modified spectrum with left and right modified sidebands at each side of the center frequency, respectively; wherein generating the modified sequence of symbols comprises generating the left and right modified sidebands by shifting the left and right sidebands away from the center frequency, respectively, to provide a spectral gap around the center frequency; and
- amplifying a signal derived from the modified sequence of symbols (131) to yield the modulating signal;

wherein the left and right sidebands are shifted to provide a frequency gap around the center frequency corresponding to zero frequency.

**13.** A method for recovering data from a received optical signal, the method comprising

- converting the received optical signal into a received digital signal;
wherein the received digital signal exhibits a spectrum (421, 422) with a center frequency and left and right sidebands at each side of the center frequency, respectively;
- generating a modified received digital signal such that the modified received digital signal exhibits a modified spectrum (420) with left and right modified sidebands at each side of the center frequency, respectively; wherein generating the modified received digital signal comprises generating the left and right modified sidebands by shifting the left and right sidebands towards the center frequency, respectively, to close a pre-determined spectral gap; and
- recovering the data from the modified received digital signal; wherein the signal processing unit is configured to remove a frequency gap of a pre-determined width around the center frequency corresponding to the frequency.

**14.** An optical signal comprising a modulated optical signal; wherein the modulated optical signal is indicative of a modulating signal, wherein the modulating signal exhibits a spectrum with a center frequency and left and right modified sidebands at each side of the center frequency, respectively; wherein the left and right sidebands correspond to left and right sidebands of a sequence of data symbols, which have been shifted away from the center frequency, respectively, to provide a frequency gap around the center frequency corresponding to zero frequency.

Fig. 1

Fig. 2

Fig. 3

Fig. 4

Europäisches Patentamt

European Patent Office

Office européen des brevets

## EUROPEAN SEARCH REPORT

Application Number

EP 13 30 5249

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2011/106626 A2 (INTERDIGITAL PATENT HOLDINGS [US]; FREDA MARTINO [CA]; DEMIR ALPASLAN) 1 September 2011 (2011-09-01) | 1-3,8-15 | INV. H04B10/54 H04B10/588 |
| A | * paragraphs [0078] - [0081] * <br> * paragraphs [0088] - [0089] * <br> * figures 2-4 * | 4-7 | |
| A | US 7 693 429 B1 (LOWERY ARTHUR JAMES [AU]) 6 April 2010 (2010-04-06) <br> * abstract * <br> * column 1, lines 15-37 * <br> * column 5, line 26 - column 6, line 46 * <br> * column 8, lines 1-21 * <br> * column 11, lines 37-40 * <br> * figures 1A, 2 * | 1-15 | |
| A | WO 2011/151913 A1 (HITACHI LTD [JP]; SASAKI SHINYA [JP]) 8 December 2011 (2011-12-08) & US 2013/071122 A1 (SASAKI SHINYA [JP]) 21 March 2013 (2013-03-21) <br> * paragraphs [0158] - [0164] * <br> * paragraph [0190] * <br> * figures 1, 11, 12 * | 1-15 | TECHNICAL FIELDS SEARCHED (IPC) <br><br> H04B |
| A | US 2002/159121 A1 (SPICKERMANN RALPH [US]) 31 October 2002 (2002-10-31) <br> * the whole document * | 1-15 | |

The present search report has been drawn up for all claims

| Place of search | Date of completion of the search | Examiner |
|---|---|---|
| Munich | 18 July 2013 | Rolan Cisneros, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 13 30 5249

This annex lists the patent family members relating to the patent documents cited in the above-mentioned European search report.
The members are as contained in the European Patent Office EDP file on
The European Patent Office is in no way liable for these particulars which are merely given for the purpose of information.

18-07-2013

| Patent document cited in search report | | Publication date | Patent family member(s) | | Publication date |
|---|---|---|---|---|---|
| WO 2011106626 | A2 | 01-09-2011 | US 2012057872 A1<br>WO 2011106626 A2 | | 08-03-2012<br>01-09-2011 |
| US 7693429 | B1 | 06-04-2010 | NONE | | |
| WO 2011151913 | A1 | 08-12-2011 | US 2013071122 A1<br>WO 2011151913 A1 | | 21-03-2013<br>08-12-2011 |
| US 2002159121 | A1 | 31-10-2002 | NONE | | |

EPO FORM P0459

For more details about this annex : see Official Journal of the European Patent Office, No. 12/82